# EUROPÄISCHE PATENTANMELDUNG

(11) **EP 1 714 837 A1**
(43) Veröffentlichungstag der Anmeldung: **25.10.2006**
(21) Anmeldenummer: 06006937.4
(22) Anmeldetag: 31.03.2006
(51) Int. Cl.: B60R 21/0136

(54) **Schutzeinrichtung an der Frontklappe eines Kraftfahrzeugs**

(30) Priorität: 19.04.2005 DE 102005017992
(71) Anmelder: Bayerische Motorenwerke Aktiengesellschaft, 80809 München (DE)
(72) Erfinder: Köstler, Ulrich, 85241 Hebertshausen (DE); Drexl, Thomas, 80801 München (DE); Fichtinger, Gerhard, 85630 Grasbrunn (DE)

(57) **Zusammenfassung**

Schutzeinrichtung an der Frontklappe (1) eines Kraftfahrzeugs, mit einem Sensor (6, 6"), der einen Zusammenstoß eines Objekts (3) mit dem Kraftfahrzeug (2) erfassen kann und dann ein Signal an eine Einrichtung (7) weiter leitet, die den hinteren Bereich der Frontklappe (1) nach oben in eine Schutzlage ausstellt, in der die Frontklappe (1) in vertikaler Richtung nach unten elastisch und/oder gedämpft abgestützt ist. Der Sensor (6, 6") gibt bei einem Aufprall auf den vorderen Bereich der Frontklappe (1) das Signal zum Ausstellen des hinteren Bereiches der Frontklappe (1) an die Einrichtung (7) ab.

## Beschreibung

Die Erfindung betrifft eine Schutzeinrichtung an der Frontklappe eines Kraftfahrzeugs, mit den im Oberbegriff des Patentanspruches 1 angegebenen Merkmalen.

Eine derartige Schutzeinrichtung ist in der WO 2004/089704 A1 an einem Kraftfahrzeug als Fußgängerschutz ausgebildet und weist im mittleren bis hinteren Bereich der Frontklappe des Kraftfahrzeugs oder vor bzw. hinter der vorderen Windschutzscheibe einen Sensor auf, der ein im Mikrowellen- oder Infrarotbereich wirksamer Radarsensor oder eine Kamera sein kann. Der Sensor erfasst einen über dem vorderen Bereich des Kraftfahrzeugs sichtbaren Bereich eines Objekts und ermittelt den Abstand oder die Geschwindigkeit des Objekts gegenüber dem Kraftfahrzeug. Ein weiterer Sensor ist im vorderen Bereich des Kraftfahrzeugs angeordnet, der einen Fußgänger von einem kleinen Tier unterscheiden kann und beispielsweise als Kontaktsensor ausgebildet ist. Falls ein Fußgänger mit dem Kraftfahrzeug zusammen stößt oder zusammenstoßen kann, wird durch einen Sensor oder beide Sensoren wenigstens eine Hebeeinrichtung aktiviert, die den vorderen oder hinteren Bereich der Frontklappe oder die Frontklappe vorne und hinten in eine Schutzlage anhebt, in der sich die Frontklappe bei dem Aufprall oder einem weiteren Aufprall nach unten verformen kann, wodurch beispielsweise die Bewegung des Kopfes des Fußgängers derart verlangsamt sein soll, dass Verletzungen vermieden sind. Der Veröffentlichung ist nicht entnehmbar, ob die wenigstens eine Hebeeinrichtung reversibel oder irreversibel ausgebildet ist. Wurde bei einer irreversiblen Ausbildung der Hebeeinrichtung die Frontklappe versehentlich hochgestellt, ist zum Rückstellen der Hebeeinrichtung bzw. der Frontklappe in ihre Schließlage bzw. Ausgangslage ein teurer Werkstattaufenthalt erforderlich.

Der Erfindung liegt die Aufgabe zu Grunde, eine Schutzeinrichtung mit den Merkmalen im Oberbegriff des Patentanspruches 1 anzugeben, die kostengünstiger zu fertigen ist, Fehlhochstellungen der Frontklappe in die Schutzlage weitgehend vermeidet und bei einer Fehlhochstellung ein kostengünstigeres Rückstellen der Frontklappe in ihre Schließlage ermöglicht.

Diese Aufgabe ist durch die Merkmale im Patentanspruch 1 gelöst. Vorteilhafte Ausgestaltungen der Erfindung sind den Unteransprüchen entnehmbar.

Nachdem der Sensor erst bei einem Aufprall auf den vorderen Bereich der Frontklappe ein Signal zum Ausstellen des hinteren Bereiches der Frontklappe an die Einrichtung abgibt, wird der hintere Bereich der Frontklappe überwiegend erst bei einem tatsächlich eingetretenen Unfall ausgestellt. Die den hinteren Bereich der Frontklappe ausstellende Einrichtung kann deshalb einen kostengünstigen irreversiblen Aktuator aufweisen, der vorwiegend nur dann bei einem Werkstattaufenthalt in seine Ausgangslage zurück zustellen ist, wenn die Frontklappe ohnehin bei dem Aufprall beschädigt wurde. Bei einer vorteilhaften Ausgestaltung ist der vordere Bereich der Frontklappe elastisch und/oder dämpfend nachgiebig ausgebildet. Der Sensor kann bei einer auf den vorderen Bereich der Frontklappe einwirkenden Kraft und/oder bei einer Verformung des vorderen Bereiches der Frontklappe und/oder beim elastischen und/oder gedämpften Nachgeben des vorderen Bereiches der Frontklappe ein Signal an die Einrichtung abgeben. Ist im vorderen Bereich des Kraftfahrzeugs ein weiterer Sensor, beispielsweise ein kostengünstiger Drucksensor angeordnet, der bei einem Kontakt mit einem Objekt ein Signal an die Einrichtung oder an eine weitere Einrichtung abgibt, so kann die Einrichtung bzw. die weitere Einrichtung den vorderen Bereich der Frontklappe vorzugsweise über wenigstens einen reversiblen Aktuator ausstellen. Wird der vordere Bereich der Frontklappe bereits bei einem geringfügigen Anstoßen eines vorderen Bereiches des Kraftfahrzeugs an einem Hindernis oder bei einem Steinschlag unnötig nach oben in die Schutzstellung ausgestellt, so kann bei Verwendung wenigstens eines reversiblen Aktuators eine beliebige Person den vorderen Bereich der Frontklappe beispielsweise gegen die Kraft eines Federelements in ihre Schließlage bzw. Ausgangslage zurück verstellen. Der vordere Bereich der Frontklappe wird dann in der Schließlage bzw. Ausgangslage der Frontklappe vorzugsweise selbsttätig arretiert und/oder verriegelt. Hierfür ist eine verhältnismäßig geringe Rückstellkraft erforderlich, die zumindest von einer erwachsenen Person ohne eine Beschädigung der Frontklappe durch einen entsprechenden Druck auf die Frontklappe aufzubringen ist.

Zwei Ausführungsbeispiele der Erfindung werden nachfolgend an Hand einer Zeichnung näher erläutert. Es zeigen
- Fig. 1: ein erstes Ausführungsbeispiel mit einem Sensor und einem Aktuator und
- Fig. 2: ein zweites Ausführungsbeispiel mit zwei Sensoren und zwei Aktuatoren.

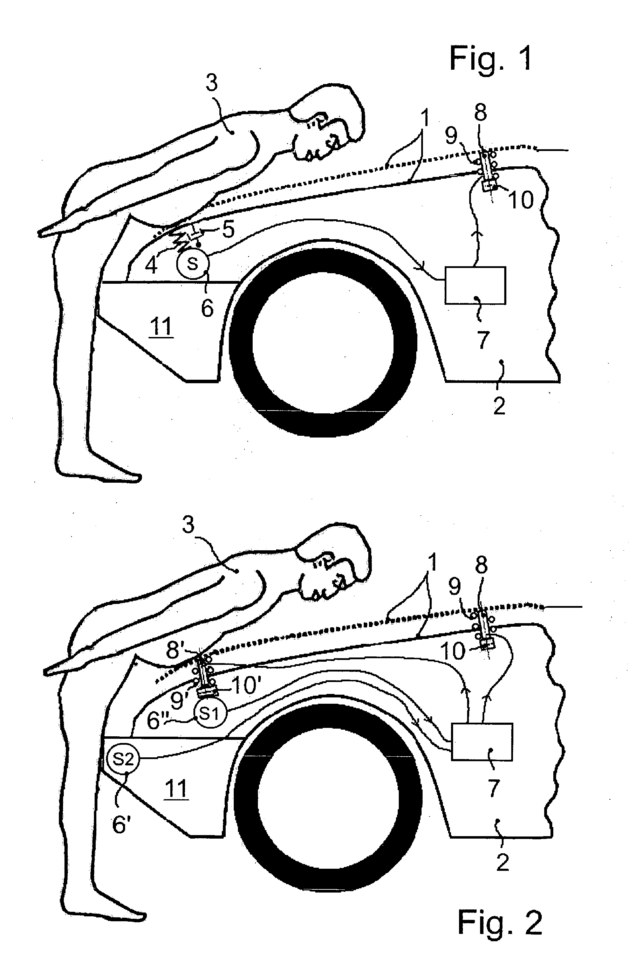

Die in Figur 1 in einer vereinfachten Prinzipskizze dargestellte Schutzeinrichtung ist an der Frontklappe 1 eines Kraftfahrzeugs 2 vorgesehen und soll einen vorne mit dem Kraftfahrzeug 2 zusammen stoßenden Fußgänger 3 vor Verletzungen insbesondere im Oberkörper- und Kopfbereich schützen. Zum Schutz der Beine des Fußgängers 3 ist eine andere, nicht dargestellte Einrichtung vorgesehen.

Die Schutzeinrichtung sieht vor, dass die als Motorhaube ausgebildete Frontklappe 1 an ihrem vorderen Bereich über eine elastische Federeinrichtung 4 und wenigstens ein Dämpfungselement 5 elastisch und gedämpft abgestützt ist. Außerdem ist im vorderen Bereich der Frontklappe 1 ein mit der Ziffer S gekennzeichneter Sensor 6 angeordnet, der beispielsweise als Drucksensor ausgebildet einen Aufprall einer Person auf den vorderen Bereich der Frontklappe 1 erfasst und dann ein beispielsweise elektrisches Signal an eine Einrichtung 7 übermittelt, die einen Aktuator 8 aktiviert, der den hinteren Bereich der Frontklappe 1 noch oben in die durch eine unterbrochene Linie dargestellte Schutzlage hochgestellt. Zumindest nach dem Hochstellen des hinteren Bereiches der Frontklappe 1 in die Schutzlage ist der Aktuator 8 nach unten nachgiebig. In der Schutzlage der Frontklappe 1 ist auch der hintere Bereich der Frontklappe 1 über wenigstens ein Federelement 9 elastisch und über eine Dämpfungseinrichtung 10 gedämpft nach unten nachgiebig.

Schlägt nach einem Aufprall beispielsweise des Oberkörpers des Fußgängers 3 auf den vorderen Bereich der Frontklappe 1 der Kopf des Fußgängers 3 auf den mittleren bis hinteren Bereich der in die Schutzlage verstellten Frontklappe 1 auf, so werden der Oberkörper und der Kopf des Fußgängers 3 über die jeweils mit der Frontklappe 1 zusammen wirkende Federeinrichtung 4 und das Federelement 6 elastisch abgefedert und die Aufprallbewegungen des Oberkörpers und des Kopfes über das Dämpfungselement 5 im vorderen Bereich der Frontklappe 1 und die im hinteren Bereich der Frontklappe 1 vorgesehene Dämpfungseinrichtung 10 verlangsamt. Dadurch sind unfallbedingte Verletzungen am Oberkörper und im Kopfbereich des Fußgängers 3 vermieden oder zumindest wesentlich herabgesetzt. Nachdem der Aktuator 8 den hinteren Bereich der Frontklappe 1 erst dann nach oben in die Schutzlage ausstellen, wenn ein Objekt wie beispielsweise ein Fußgänger 3 auf den vorderen Bereich der Frontklappe 1 aufgeprallt ist, kann für den Aktuator 8 ein einfacher, kostengünstiger, irreversibler Aktuator 8 verwendet werden. Das Kraftfahrzeug 2 dürfte bei dem Aufprall zumindest im vorderen Bereich der Frontklappe 1 beschädigt worden sein, so dass die Kosten für einen Ersatz des Aktuators 8 oder das Rückstellen des Aktuators 8 in seine Ausgangslage gegenüber den anderen Reparaturkosten gering sein dürften. Der Sensor 6 kann ein einfacher, kostengünstiger Drucksensor sein.

Das in Figur 2 dargestellte zweite Ausführungsbeispiel weist mit dem ersten Ausführungsbeispiel übereinstimmende Bauteile auf, die zur Vermeidung einer wiederholten Beschreibung mit gleichen Bezugszahlen und teilweise mit einem hochgestellten Zeichen versehen sind.

Bei dem zweiten Ausführungsbeispiel ist am vorderen Bereich des Kraftfahrzeugs 2 in einer Stoßstange 11 wenigstens ein vorderer, mit S2 gekennzeichneter Sensor 6' angeordnet, der bei einem erfolgten oder bevorstehenden Aufprall beispielsweise der Füße eines Fußgängers 3 auf die Stoßstange 11 des Kraftfahrzeugs 3 ein Signal an die Einrichtung 7 oder an eine weitere Einrichtung abgibt, die dann über einen Aktuator 8' den vorderen Bereich der Frontklappe 1 in die in Figur 2 durch eine unterbrochene Linie dargestellte Schutzstellung nach oben anhebt.

Der Sensor 6' ist beispielsweise ein Drucksensor oder ein Sensor, der elektromagnetische Wellen in einem sichtbaren und/oder unsichtbaren Wellenbereich erfassen kann, die von dem Fußgänger ausgesandt und/oder reflektiert werden.

In der Schutzstellung ist der vordere Bereich der Frontklappe 1 über wenigstens ein Federelement 9' in vertikaler Richtung nach unten elastisch abgefedert und die Bewegung des vorderen Bereiches der Frontklappe 1 nach unten ist über eine Dämpfungseinrichtung 10' abgedämpft, so dass ein Aufprall beispielsweise des Oberkörpers eines Fußgängers 3 auf den vorderen Bereich der Frontklappe 1 entsprechend abgefedert und gedämpft wird.

Der Aktuator 8' ist reversibel ausgebildet. Durch eine entsprechende Krafteinwirkung etwa in vertikaler Richtung nach unten kann deshalb der vordere Bereich der Frontklappe 1 aus seiner Schutzstellung in seine Schließlage zurück verstellt werden, in der zumindest der vordere Bereich der Frontklappe 1 selbsttätig verrastet und/oder verriegelt wird. Ein manuelles Rückstellen des vorderen Aktuators 8' in seine Ausgangslage, beispielsweise durch den Fahrer des Kraftfahrzeugs 2 oder eine andere Person, ist in den Fällen besonders vorteilhaft, in denen der vordere Bereich der Frontklappe 1, beispielsweise bei einem geringfügigen Anstoßen der vorderen Stoßstange des Kraftfahrzeugs 2 an einem Gegenstand oder anderen Fahrzeug unnötig in die Schutzstellung angehoben wird.

Bei einem irreversiblen Aktuator wäre in diesem Fall ein teurer Werkstattaufenthalt erforderlich, bei dem der Aktuator 8' in die Ausgangsstellung zurück verstellt oder ausgetauscht werden müsste.

Einen Aufprall beispielsweise des Oberkörpers eines Fußgängers 3 oder eines anderen Objekts auf den vorderen Bereich der Frontklappe 1 erfasst ein weiterer, mit S1 gekennzeichneter Sensor 6", der dann ein beispielsweise elektrisches Signal an die Einrichtung 7 oder an eine weitere Einrichtung abgibt, die in der beim ersten Ausführungsbeispiel beschriebenen Weise über den Aktuator 8 den hinteren Bereich der Frontklappe 1 in die in der Figur 2 durch eine unterbrochene Linie dargestellte Schutzlage nach oben anhebt. In dieser Schließlage ist der hintere Bereich der Frontklappe 1 über das Federelement 9 und die Dämpfungseinrichtung 10 elastisch und dämpfend abgestützt. Bei einem dann erfolgenden Aufprall beispielsweise des Kopfes des Fußgängers 3 auf die Frontklappe 1 wird der Aufprall des Kopfes wie der Oberkörper des Fußgängers 3 einerseits über das Federelement 9 Strich und die Dämpfungseinrichtung 10 Strich am vorderen Bereich der Frontklappe 1 und andererseits über das Federelement 9 und die Dämpfungseinrichtung 10 im hinteren Bereich der Frontklappe elastisch abgefedert und gleichzeitig gedämpft, um dadurch Verletzungen beispielsweise des Fußgängers 3 zu vermeiden.

Der beim zweiten Ausführungsbeispiel hintere Aktuator 8 ist wie bei dem ersten Ausführungsbeispiel irreversibel ausgebildet und deshalb nach einem Verstellen des hinteren Bereiches der Frontklappe 1 in die Schutzlage bei einem Werkstattaufenthalt in die Ausgangslage zurück zu stellen oder gegen einen neuen Aktuator 8 auszutauschen. Diese Kosten sind jedoch gering gegenüber den weiteren Kosten, die bei einer Beschädigung des vorderen Bereiches der Frontklappe 1 zu erwarten sind, wenn ein Objekt, beispielsweise der Fußgänger 3 auf den vorderen Bereich der Frontklappe 1 aufschlägt und diese deformiert.

Bei beiden Ausführungsbeispielen ist die Schutzeinrichtung bei einer Fahrgeschwindigkeit des Kraftfahrzeugs 2 etwa zwischen 20 und 50 bis 60 Km/h wirksam.

Die Schutzeinrichtung kann auch in einem anderen Geschwindigkeitsbereich wirksam sein. Die von einem Sensor ein Signal erhaltende Einrichtung kann auf unterschiedliche Weise den hinteren oder vorderen oder den hinteren und vorderen Bereich der Frontklappe eines Kraftfahrzeugs in eine Schutzlage oder Schutzstellung nach oben Verstellen. Bei einer einfachsten Ausführung ist ein einfacher Drucksensor im vorderen Bereich der Frontklappe und ein irreversibler Aktuator im hinteren Bereich der Frontklappe verwendet. Sind zwei Sensoren und zwei Aktuatoren vorgesehen, so können in einer einfachsten Ausführung die beiden Sensoren einfache Drucksensor und die Aktuatoren irreversibel ausgebildet sein. Vorzugsweise sind jedoch in diesem Fall der dem vorderen Bereich der Frontklappe zugeordnete Sensor reversibel und der dem hinteren Bereich der Frontklappe zugeordnete Sensor irreversibel ausgebildet. Bei den Ausführungsbeispielen sind im vorderen und hinteren Bereich der Frontklappe jeweils ein Federelement oder eine Federeinrichtung und jeweils eine Dämpfungseinrichtung vorgesehen. Es kann jedoch auch vorgesehen sein, dass im vorderen und/oder hinteren Bereich der Frontklappe lediglich ein Federelement bzw., eine Federeinrichtung oder eine Dämpfungseinrichtung angeordnet ist bzw. sind. Bei einer weiteren Vereinfachung des ersten Ausführungsbeispiels können die im vorderen Bereich der Frontklappe vorgesehene Federeinrichtung und/oder das Dämpfungselement auch entfallen. Beispielsweise in diesen Fällen kann der am vorderen Bereich der Frontklappe angeordnete Sensor bei einer elastischen und/oder plastischen Verformung eines vorderen Bereiches der Frontklappe das Signal zum Ausstellen des hinteren Bereiches der Frontklappe an die Einrichtung abgeben. Die Schutzeinrichtung schützt einen Fußgänger oder ein anderes Objekt, beispielsweise einen Radfahrer oder Motorradfahrer.

## Patentansprüche

1. Schutzeinrichtung an der Frontklappe eines Kraftfahrzeugs, mit einem Sensor, der einen Zusammenstoß eines Objekts mit dem Kraftfahrzeug erfassen kann und dann ein Signal an eine Einrichtung weiter leitet, die den hinteren Bereich der Frontklappe nach oben in eine Schutzlage ausstellt, in der die Frontklappe in vertikaler Richtung nach unten elastisch und/oder gedämpft abgestützt ist, **dadurch gekennzeichnet, dass** der Sensor (6, 6") bei einem Aufprall auf den vorderen Bereich der Frontklappe (1) das Signal zum Ausstellen des hinteren Bereiches der Frontklappe (1) an die Einrichtung (7) abgibt.

2. Schutzeinrichtung nach Anspruch 1, **dadurch gekennzeichnet, dass** der vordere Bereich der Frontklappe (1) nach unten elastisch und/oder gedämpft nachgiebig abgestützt ist.

3. Schutzeinrichtung nach Anspruch 1 oder 2, **dadurch gekennzeichnet, dass** der Sensor (6, 6") beim Einwirken einer etwa vertikalen Kraft auf den vorderen Bereich der Frontklappe (1) und/oder bei einer Verformung des vorderen Bereiches der Frontklappe und/oder beim elastischen und/oder gedämpften Nachgeben des vorderen Bereiches der Frontklappe (1) das Signal an die Einrichtung (7) abgibt.

4. Schutzeinrichtung nach einem der Ansprüche 1 bis 3, **dadurch gekennzeichnet, dass** am vorderen Bereich (11) des Kraftfahrzeugs (2) wenigstens ein vorderer Sensor (6') angeordnet ist, der bei einem erfolgten oder bevorstehenden Aufprall eines Objekts (3) auf den vorderen Bereich des Kraftfahrzeugs (2) ein Signal an die Einrichtung (7) oder an eine weitere Einrichtung abgibt, die den vorderen Bereich der Frontklappe (1) in eine Schutzstellung nach oben ausstellt, in der die Frontklappe (1) an ihrem vorderen Bereich in vertikaler Richtung nach unten elastisch und/oder gedämpft abgestützt ist.

5. Schutzeinrichtung nach einem der Ansprüche 1 bis 4, **dadurch gekennzeichnet, dass** die Einrichtung (7) und gegebenenfalls die weitere Einrichtung den hinteren Bereich der Frontklappe (1) und gegebenenfalls zusätzlich den vorderen Bereich der Frontklappe (1) über jeweils wenigstens einen Aktuator (8, 8') ausstellt.

6. Schutzeinrichtung nach Anspruch 5, **dadurch gekennzeichnet, dass** der dem hinteren Bereich der Frontklappe zugeordnete Aktuator (8) irreversibel ausgebildet ist.

7. Schutzeinrichtung nach Anspruch 5 oder 6, **dadurch gekennzeichnet, dass** zumindest der dem vorderen Bereich der Frontklappe (1) zugeordnete Aktuator (8') reversibel ausgebildet ist oder zusätzlich der vordere Bereich der Frontklappe (1) durch eine entsprechende Krafteinwirkung in vertikaler Richtung aus seiner Schutzstellung in seine Schließlage zurück verstellt werden kann, in der zumindest der vordere Bereich der Frontklappe (1) selbsttätig verrastet und/oder verriegelt wird.

8. Schutzeinrichtung nach einem der Ansprüche 1 bis 7, **dadurch gekennzeichnet, dass** der Sensor (6, 6") und/oder gegebenenfalls der vordere Sensor (6') als Drucksensor ausgebildet ist bzw. sind.

9. Schutzeinrichtung nach einem der Ansprüche 1 bis 8, **dadurch gekennzeichnet, dass** der vordere Sensor elektromagnetische Wellen in einem sichtbaren und/oder unsichtbaren Wellenbereich erfassen kann, die von dem Objekt ausgesandt und/oder reflektiert werden.

10. Schutzeinrichtung nach Anspruch 9, **dadurch gekennzeichnet, dass** die Schutzeinrichtung bei einer Fahrgeschwindigkeit des Kraftfahrzeugs zwischen 20 bis 50 oder 60 Km/h wirksam ist.
